Europäisches Patentamt

European Patent Office

Office européen des brevets

(11) Publication number: **0 519 541 A2**

# EUROPEAN PATENT APPLICATION

(21) Application number: **92201584.7**

(22) Date of filing: **02.06.92**

(51) Int. Cl.⁵: **G02B 27/00**, G02B 17/00, G02B 19/00

(30) Priority: **17.06.91 US 716165**

(43) Date of publication of application:
**23.12.92 Bulletin 92/52**

(84) Designated Contracting States:
**DE FR GB IT**

(71) Applicant: **DELCO ELECTRONICS CORPORATION**
**700 East Firmin Street**
**Kokomo Indiana 46902(US)**

(72) Inventor: **Murphy, Morgan Daniel**
**1616 Greenacres Drive**
**Kokomo, Indiana 46901(US)**

(74) Representative: **Haines, Arthur Donald et al**
**Patent Section 1st Floor Gideon House 28**
**Chapel Street**
**Luton, Bedfordshire LU1 2SE(GB)**

(54) **Image source for vehicle head-up display.**

(57) An image source for a head-up display for a vehicle comprises at least one warning indicator (51,53), the or each indicator including an indicator housing (75) within which is formed a cavity, an aperture (83) and a curved reflective surface (72). A light source (68) is disposed so as to emit light into the indicator housing such that light is reflected off the curved reflective surface and through the aperture, the curved reflective surface (72) focusing the light towards a focal point (60) lying outside the housing (75). The or each warning indicator also includes a support (62) upon which a graphic symbol (51,53) is supported, the support (62) being mounted at the aperture (83) such that the graphic symbol (51,53) is lit by the light from the curved surface (72). The or each graphic symbol (51,53) is lit more brightly than other symbols (49) of the head-up display, produced, for example, from a vacuum fluorescent display (25).

Fig. 3.

This invention relates to an image source for a head-up display for a vehicle.

Head-up displays have long been used in aeroplanes to aid the pilots. The head-up display reflects information the pilot needs off of a partial mirror or the aeroplane windscreen, referred to as the combiner, and projects that information at a distance in front of the windscreen so that the pilot does not have to look at the cockpit to see the information.

More recently, head-up displays have been used in automotive applications. In many of these automotive applications, the image is projected up and reflected off of the vehicle front windscreen to appear at a distance in front of the driver. With a head-up display in a vehicle, the driver does not have to adjust his or her sight from the road to read information, such as vehicle speed, which is normally displayed in the vehicle instrument panel.

Additional information which may be included in the projected display is vehicle operating conditions. Such information typically indicates to the vehicle driver the state of different vehicle systems, e.g., whether the headlight high beams are on, whether there is a shortage of fuel or low oil pressure, etc.

The optics of many head-up display systems magnify the projected image, which is the projection of an image source. For implementations in which the projected image is magnified, the image source may be miniature in size while still projecting a large readable image for the driver.

In some head-up display systems, the brightness of the projected image is enhanced by projecting the image on a treated combiner or windscreen. However, treating the windscreen increases the cost of manufacture of the vehicle.

This invention seeks to provide an improved image source for a head-up display.

According to an aspect of the present invention, there is provided an image source for a head-up display of a vehicle as specified in claim 1.

The image source can be made sufficiently bright so that the projected image remains visible to the vehicle operator even on bright sunny days, thereby eliminating the need for a treated windscreen. Furthermore, it can be made miniature in size so as to be suitable for implementation in a head-up display image source.

A preferred embodiment comprises a housing defining a cavity and having an aperture, the housing having an inner reflective surface with a curve, the curve having a focal point outside the housing such that the aperture is located between the curved surface and the focal point, light source mounted within the housing emitting light substantially parallel to a plane of the aperture, wherein the light is reflected off of the reflective surface and through the aperture in a manner in which the light is substantially focused at the focal point, and a graphics plate, mounted over the aperture, wherein the graphics plate defines a lit symbol to be projected.

This invention can provide an added packaging advantage when the light source is mounted orthogonal to the projection path of the projected display. This reduces the necessary depth required by the display source and may be a critical feature in implementations in which packaging space is minimal.

An embodiment of the present invention is described below, by way of illustration only, with reference to the accompanying drawings, in which:-

Figure 1 is a schematic illustration of a head-up display system which includes an embodiment of lighting apparatus;

Figure 2 is an illustration of graphics symbols for the image source shown in Figure 1, including a plurality of warning symbols;

Figure 3 shows a first embodiment of lighting apparatus; and

Figure 4 shows a second embodiment of lighting apparatus.

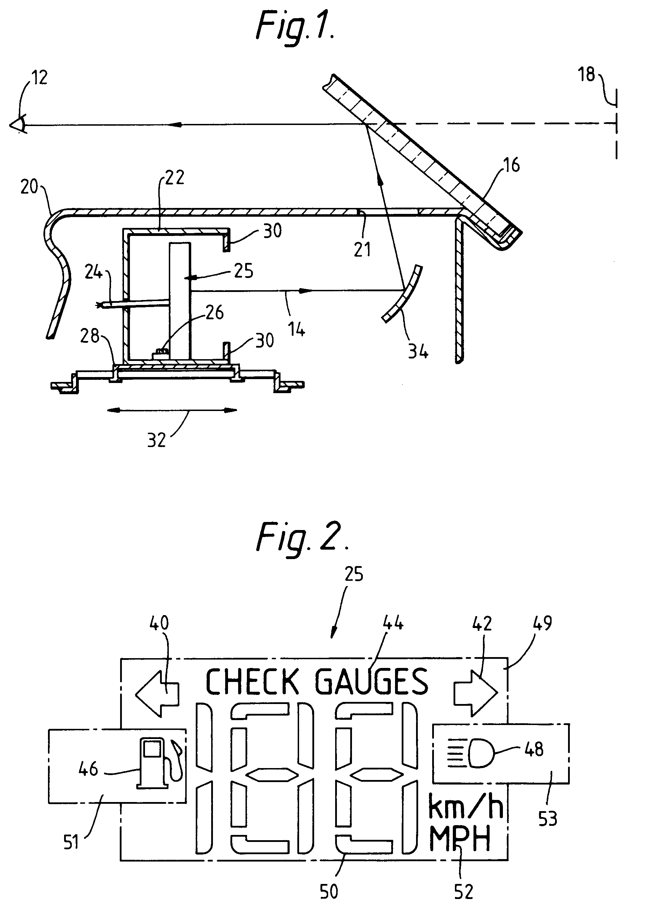

Referring to Figure 1, a head-up display includes an image source 25, an aspherical mirror 34, and a combiner, such as vehicle windscreen 16. The image source 25 projects light along path 14, which is reflected off the aspherical mirror 34 so as to project a first magnified virtual image (not shown) of the display source 25 off the aspherical mirror 34. The projected image passes through an opening 21 in the upper portion of the instrument panel enclosure 20 and is reflected off the windscreen 16, which acts as the combiner element. The windscreen 16 projects the image 18, which is a virtual image of the image from the aspherical mirror, preferably at least two metres in front of driver's eye 12. The light travels from windscreen 16 along path 14 to the operator's eye 12, which perceives the virtual image 18. The windscreen 16, if curved, may additionally enlarge the projected image.

It is preferable that the aspherical mirror 34 be shaped to correct for aberrations in projection caused by the aspherical shape of windscreen 16. An aspherical mirror that can correct for the aspherical shape of a vehicle windscreen can be readily designed by one skilled in the art using a ray tracing program such as Code 5™, commercially available for licensed use from Optical Research Associates (ORA), Pasadena, CA. Of course, if the windscreen 16 is flat or spherical at the point of projection, then the mirror 34 may be spherical.

In this example, the image source 25 includes a high brightness vacuum fluorescent display in combination with at least one warning indicator. Alternatively, instead of a vacuum fluorescent display, the image source 25 may include any other type of suitable display, including an LCD display or a well-lit analogue gauge, such as the type shown in our copending British Patent Application GB-A-2251115, the disclosure of which is incorporated herein by reference.

The image source 25 is secured to a mount 28, which is preferably adjustable, and may also be contained in a housing 22. The housing 22, where provided, includes baffles 30 to prevent unwanted light reflections from reaching the aspherical mirror 34. Cable 24 provides suitable electrical signals to the display 25.

Typically, vehicle windscreens have first and second reflecting surfaces which tend to reflect first and second images of the image source 25 so that the projected image 18 appears as a double image. It has been found, however, that this double image can be eliminated by taking advantage of a natural wedge found in many vehicle windscreens due to manufacturer tolerances. By adjusting the image source 25 along the direction of arrows 32 it is possible, in many instances, to converge an otherwise double image into a single projected image 18.

The adjustable mount 28 may include a slotted base which is movable along a guide bar in the direction of arrows 32. A locking screw 26 is placed in a threaded hole of a support attached to the image source 25 and may be tightened against the guide bar to hold the slotted base and image source 25 in place once the image source is adjusted so that the display image appears clear to the driver.

Possible variations on the adjustable mount 28 may be desired for different embodiments of this invention. For example, instead of having a locking screw as described above, the adjustable mount may be connected to an adjustable lever through a cable assembly so that it may be more easily adjusted by the driver. Alternatively, the adjustable mount may include a small DC motor and a screw gear so that the adjustment of the position of the image source can be effected by means of a remote switch. The adjustable mounts described above are just examples and may be replaced by any suitable adjustable mount in which image source 25 is adjustable in the direction of arrows 32. If desired, the mount can be fixed.

Mirror 34 may be placed on a pivot mechanism (not shown but easily implemented by one skilled in the art) to adjust the height of the displayed image by pivoting the mirror 34 about its longitudinal axis to suit the eye levels of different drivers.

The entire apparatus comprising the image source 25, adjustable mount 28, and mirror 34 may be placed within the space usually used by vehicle instrumentation. In such a case, opening 21 is required to allow the display to be projected onto the windscreen 16. Alternatively, the entire apparatus may be mounted in a housing above the area normally used for vehicle instrumentation. Any other suitable area in the vehicle may be used for the head-up display.

Referring to Figure 2, a sample display for the display source 25 is shown. In this example, components of the display including turn indicator signals 40 and 42, a check gauges indicator 44, a digital speedometer 50 and a speed scale indicator 52 form part of a vacuum fluorescent display 49. A low fuel indicator 46 and a high beam indicator 48 form part of warning indicators 51 and 53 according to an embodiment of this invention.

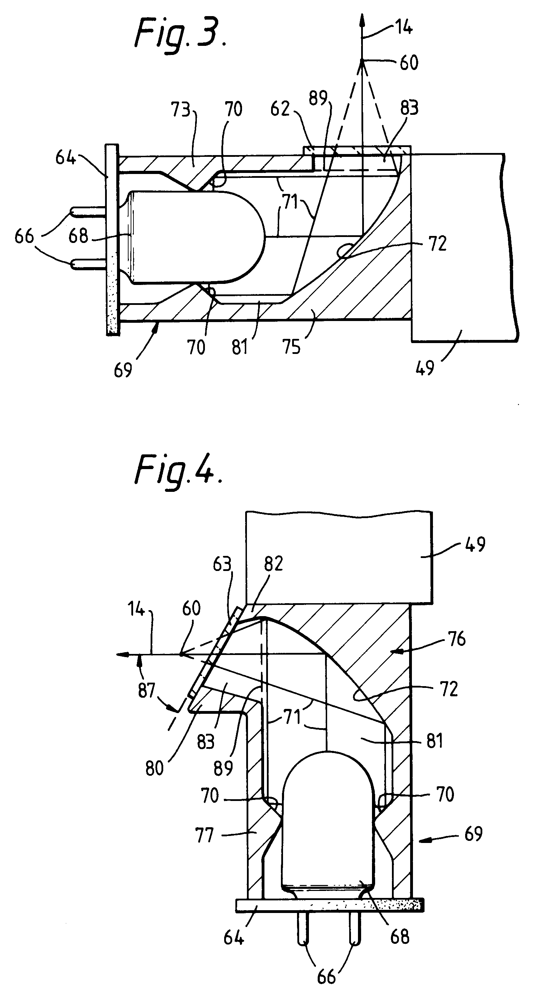

Referring to Figure 3, an embodiment of warning indicator is shown, disposed in proximity to vacuum fluorescent display 49. The warning indicator includes a light source 68, which may be a high brightness LED or an incandescent bulb or any other suitable light source. The light source 68 is mounted in housing 69 and receives power through terminals 66. The housing 69 provides a cavity 81 and an aperture 83 having a plane parallel to line 89. Light from the light source 68 travels along paths 71 through the cavity 81 substantially parallel to the plane 89 and is reflected off inner reflective surface 72. Inner reflective surface 72 preferably has a substantially parabolic shape, with the focal point 60 of the parabola lying outside the housing such that aperture 83 is between the inner reflective surface 72 and the focal point 60 and such that the reflected light travels through aperture 83.

The housing 75 also includes a reflective surface 70, which may be annular, disposed so as to direct light emitted from the light source 68 substantially transversely of the light source, towards the curved inner surface 72.

A graphics plate 62 provides the warning symbol and is mounted at the aperture 83 so that light travelling through aperture 83 is transmitted through at least part of the graphics plate 62. The light striking the graphics plate is dispersed through the graphics plate 62 in a predetermined manner so that the warning symbol, which may be one of the symbols 46 and 48 shown in Figure 2, is lit brightly so as to provide a bright projected image. The graphics plate 62 may be constructed of generally translucent plastics material with an opaque layer formed thereon, for example a pattern of opaque paint, selectively masking the graphics plate 62 so as to outline the warning symbol. The graphics plate 62 may include a light filter, either formed by the translucent plastics layer or bonded thereto, to filter the light from light source 68, if this is desired. If light source 68 is an LED, filtration may not be necessary.

The housing 69 may be constructed in any suitable manner so long as the inner reflective surface 72 is satisfactorily reflective. In the example shown, housing 69 comprises an end piece 64 of plastics material and a body portion 75, possibly machined from aluminium, which includes a supporting rib 73 for supporting the light source 68. The inner reflective surface 72 and reflective surfaces 70 are preferably polished for increased efficiency.

As can be seen from the illustration of light paths 71, this display source increases the brightness of the warning indicator by focusing the light from the light source 68 by means of the inner reflective surface 72, thereby increasing the intensity of the light striking the inner reflective surface 72.

Referring to Figure 4, another embodiment of display source is shown in which the graphics plate 63 projects a warning symbol in three dimensions. Graphics plate 63 is mounted at an angle 87, less than 90 degrees, so as not to be orthogonal to light path 14. Since the image 18 is a real image of the display source 25, the warning image (part of image 18) of graphics plate 63 appears to the driver's eye in a plane that is not orthogonal to the driver's line of sight. For example, when the graphics plate 63 is designed to project the high beam indicator symbol 48, the high beam indicator signal can be made to appear to point in the direction of motion of the vehicle. This added dimension of depth to the projected display can be pleasing to the driver. The apparatus can be arranged so that a single millimetre of movement of the ends of graphics plate 63 can translate into one hundred millimetres or more of projected depth, depending upon the focal length of the mirror 34.

The display source 69 shown in Figure 4 is otherwise similar to that shown in Figure 3, except that the housing 76 includes shoulders 80 and 82 for mounting the graphics plate 63 in the aperture 83 at a desired angle 87.

Variations to the above-described embodiments may be made, for example different types of optical elements may be provided, including refractive lenses and separate combiners (instead of windscreen 16), and the windscreen 16 may be coated to enhance reflectivity, if so desired.

The high brightness warning indicators 51, 53 in Figure 2 are shown in combination with another image source, in this case the vacuum fluorescent display 49. However, if it is desired to project only warning indicators, one or more of the embodiments shown in Figures 3 and/or 4 may be used in combination, without any other type of display.

**Claims**

1. An image source for a head-up display for a vehicle comprising at least one warning indicator (51,53), the or each indicator including a) an indicator housing (75) within which is formed a cavity, an aperture (83) and a curved reflective surface (72), b) a light source (68) disposed so as to emit light into the indicator housing such that light is reflected off the curved reflective surface and through the aperture, the curved reflective surface focusing the light towards a focal point (60) lying outside the housing such that the aperture is located between the curved reflective surface and the focal point, and c) a support (62) upon which a graphic symbol (51,53) is supported, the support being mounted at the aperture such that in use the graphic symbol is lit by the light from the curved surface.

2. An image source according to claim 1, wherein the light source (68) of the or at least one of the warning indicators is a light emitting diode.

3. An image source according to claim 1 or 2, wherein in use the light is focused conically along a longitudinal axis by the curved reflective surface of the or at least one of the warning indicators, the support (62) of the or each said at least one warning indicator (51,53) being disposed at an angle to the normal of the longitudinal axis.

4. An image source according to claim 1, 2 or 3, wherein in use the curved reflective surface (72) focuses light from the light source (68) so as to cause the graphic symbol (52,53) to be brightly lit.

5. An image source according to any preceding claim, wherein the curved reflective surface (72) of the or at least one of the warning indicators is substantially parabolic in shape.

6. An image source according to any preceding claim, comprising a vacuum fluorescent display (49).

7. An image source according to any preceding claim, wherein the housing (75) of the or at least one of the warning indicators includes an aluminium body portion (75).

8. An image source according to any preceding claim, wherein the housing (75) of the or at least one of the warning indicators includes an end piece (64) of plastics material.

9. A head-up display comprising an image source according to any preceding claim and a combiner element (16) for projecting an image from the image source.

10. A head-up display according to claim 9, wherein the combiner element (16) is a vehicle windscreen.

11. A head-up display according to claim 9 or 10, comprising an optical element (34) disposed between the image source and the combiner element.

12. A head-up display according to claim 11, wherein the optical element (34) is an aspherical mirror.

**Fig.1.**

**Fig.2.**

CHECK GAUGES

km/h
MPH

## Fig. 3.

## Fig. 4.

7